# EUROPÄISCHE PATENTSCHRIFT

(11) **EP 4 284 670 B1**
(45) Veröffentlichungstag und Bekanntmachung des Hinweises auf die Patenterteilung: **25.12.2024**
(21) Anmeldenummer: 22701223.4
(22) Anmeldetag: 19.01.2022
(51) Int. Cl.: B60K 11/02, B60K 15/03, F01P 7/14, F01P 11/02, B60T 11/26, B60K 1/00

(54) **FLÜSSIGKEITSTANK FÜR EIN FLÜSSIGKEITSSYSTEM EINES FAHRZEUGS, FLÜSSIGKEITSSYSTEM UND FAHRZEUG**
LIQUID TANK FOR A LIQUID SYSTEM OF A VEHICLE, LIQUID SYSTEM AND VEHICLE
RÉSERVOIR DE LIQUIDE POUR UN SYSTÈME DE LIQUIDE D'UN VÉHICULE, SYSTÈME DE LIQUIDE ET VÉHICULE

(30) Priorität: 29.01.2021 DE 102021102022
(43) Veröffentlichungstag der Anmeldung: 06.12.2023
(73) Patentinhaber: HELLA GmbH & Co. KGaA, 59552 Lippstadt (DE)
(72) Erfinder: BEWERMEYER, Frank, 33142 Büren (DE); FISCHER, Finn Malte, 33106 Paderborn (DE); GROTHE, Benjamin, 59065 Hamm (DE); NIESS, Dominik, 59555 Lippstadt (DE)
(74) Vertreter: Behr-Wenning, Gregor
(86) Internationale Anmeldenummer: PCT/EP2022/051130
(87) Internationale Veröffentlichungsnummer: WO 2022/161827

(56) Entgegenhaltungen:
- EP-A2- 1 002 682
- DE-A1- 102013 004 926
- DE-A1- 102017 006 079
- DE-A1- 102019 104 333
- DE-C1- 4 312 063
- FR-A1- 2 874 879
- GB-A- 1 584 728
- US-A- 4 514 980

## Beschreibung

Die vorliegende Erfindung bezieht sich auf einen Flüssigkeitstank für ein Flüssigkeitssystem eines Fahrzeugs der im Oberbegriff des Anspruchs 1 genannten Art, ein Flüssigkeitssystem eines Fahrzeugs und ein Fahrzeug.

Derartige Flüssigkeitstanks für Flüssigkeitssysteme von Fahrzeugen, Flüssigkeitssysteme für Fahrzeuge und Fahrzeuge sind aus dem Stand der Technik in zahlreichen Ausführungsvarianten bereits bekannt. Die bekannten Flüssigkeitstanks für Flüssigkeitssysteme von Fahrzeugen umfassen dabei ein Tankgehäuse zur Bevorratung einer Flüssigkeit des Flüssigkeitssystems, wobei das Tankgehäuse mehrschalig ausgebildet ist und mindestens zwei miteinander verbundene Tankgehäuseschalen aufweist, und mindestens einen in dem Tankgehäuse integrierten Strömungskanal des Flüssigkeitssystems.

Beispielsweise ist aus der EP 1 002 682 A2 eine Anordnung gemäß dem Oberbegriff des Anspruchs 1 bekannt. Der in das Tankgehäuse integrierte Strömungskanal ist zur Ableitung von Spülluft mit dem Rückschlagventil strömungsleitend verbunden. Ähnliche Anordnungen ergeben sich auch aus der DE 10 2013 004 926 A1 und der DE 10 2019 104 333 A1, wobei die daraus bekannten Ventile als Entlüftungsventile ausgebildet sind.

Im Unterschied dazu weist die DE 10 2017 006 079 A1 ein in einen Ausgleichsbehälter integriertes Ventil auf, wobei das Ventil als Ganzes, also mit eigenem Ventilgehäuse, in dem Ausgleichsbehälter integriert ist.

Ferner sei noch auf die US 4 514 980 A, die GB 1 584 728 A, die FR 2 874 879 A1 und die DE 43 12 063 C1 hingewiesen.

Hier setzt die vorliegende Erfindung an.

Der vorliegenden Erfindung liegt die Aufgabe zugrunde, einen Flüssigkeitstank für ein Flüssigkeitssystem eines Fahrzeugs, ein Flüssigkeitssystem eines Fahrzeugs und ein Fahrzeug zu verbessern.

Diese Aufgabe wird durch einen Flüssigkeitstank für ein Flüssigkeitssystem eines Fahrzeugs mit den Merkmalen des Anspruchs 1 gelöst, der dadurch gekennzeichnet ist, dass das Tankgehäuse gleichzeitig als ein Ventilgehäuse für mindestens ein zweites Ventil des Flüssigkeitssystems zur Steuerung mindestens eines Flüssigkeitsstromes der Flüssigkeit in dem Flüssigkeitssystem ausgebildet ist. Der mindestens eine des in dem Tankgehäuse integrierten mindestens einen Strömungskanals, der mittels zwei miteinander verbundener Tankgehäuseschalen der mindestens zwei Tankgehäuseschalen ausgebildet ist, kann beispielsweise als ein den Flüssigkeitstank mit einem Rest des Flüssigkeitssystems strömungsleitend verbindender Strömungskanal ausgebildet sein. Dies ist jedoch nicht zwingend erforderlich. Entsprechend kann es sich diesbezüglich auch um einen Strömungskanal des Flüssigkeitssystems handeln, der nicht direkt mit dem Flüssigkeitstank strömungsleitend verbunden ist. Ferner wird diese Aufgabe durch ein Flüssigkeitssystem eines Fahrzeugs mit den Merkmalen des Anspruchs 5 und ein Fahrzeug mit den Merkmalen des Anspruchs 7 gelöst. Die Unteransprüche betreffen vorteilhafte Weiterbildungen der Erfindung.

Ein wesentlicher Vorteil der Erfindung liegt insbesondere darin, dass ein Flüssigkeitstank für ein Flüssigkeitssystem eines Fahrzeugs, ein Flüssigkeitssystem eines Fahrzeugs und ein Fahrzeug verbessert sind.

Aufgrund der erfindungsgemäßen Ausbildung des Flüssigkeitstanks für ein Flüssigkeitssystem eines Fahrzeugs, des Flüssigkeitssystems eines Fahrzeugs und des Fahrzeugs sind der vorgenannte Flüssigkeitstank, das vorgenannte Flüssigkeitssystem für ein Fahrzeug und das vorgenannte Fahrzeug auf konstruktiv und fertigungstechnisch besonders einfache Art und Weise realisierbar. Ferner ist dadurch eine Zentralisierung der Bauteile eines Flüssigkeitssystems für ein Fahrzeug ermöglicht. Gleichzeitig ist dabei eine strömungsoptimierte Formgebung der Strömungskanäle des Flüssigkeitssystems fertigungstechnisch leicht verwirklichbar, da der mindestens eine mittels zwei miteinander verbundener Tankgehäuseschalen ausgebildete Strömungskanal des Flüssigkeitssystems nicht nur in dem Tankgehäuse integriert ist, sondern aufgrund der vorgenannten Ausbildung konstruktiv in weiten geeigneten Grenzen frei gestaltbar ist. Ferner ist zum einen die Anzahl der Bauteile des Flüssigkeitssystems reduziert. Entsprechend vereinfacht sich die Logistik, die Lagerhaltung und die Fertigung des Flüssigkeitssystems für ein Fahrzeug. Zum anderen ist eine sehr kompakte und damit platzsparende Bauweise des Flüssigkeitssystems ermöglicht. Bevorzugt kann das zweite Ventil als ein sogenanntes Mehrwegeventil ausgebildet sein, um so die Anzahl der erforderlichen zweiten Ventile des Flüssigkeitssystems zu reduzieren. Alternativ oder zusätzlich zu dem vorgenannten Mehrwegeventil ist aber auch eine Mehrzahl von zweiten Ventilen denkbar, deren jeweiliges Ventilgehäuse jeweils in dem Tankgehäuse ausgebildet ist.

Eine besonders vorteilhafte Weiterbildung des erfindungsgemäßen Flüssigkeitstanks für ein Flüssigkeitssystem eines Fahrzeugs sieht vor, dass das erste Ventil in dem mittels der zwei miteinander verbundenen Tankgehäuseschalen ausgebildeten Strömungskanal angeordnet ist. Hierdurch ist die Anordnung des vorgenannten Ventils auf konstruktiv und fertigungstechnisch besonders einfache Art und Weise realisierbar. Dies beispielsweise deshalb, weil das vorgenannte Ventil nicht als ein separat mit einem Strömungskanal strömungsleitend zu verbindendes Bauteil ausgebildet sein muss. Bei den üblicherweise als Schlauchleitungen ausgebildeten Strömungskanälen ist es erforderlich, dass das damit zu verbindende Ventil zum einen ein hierfür geeignetes Gehäuse und zum anderen zwei mit dieser Schlauchleitung strömungsleitend verbindbare Anschlussstutzen aufweist. Dies ist bei der vorliegenden Weiterbildung des erfindungsgemäßen Flüssigkeitstanks nicht erforderlich. Entsprechend reduziert kann das erste Ventil ausgebildet sein.

Grundsätzlich ist das erste Ventil nach Art, Funktionsweise, Material, Dimensionierung und relativer Anordnung in dem korrespondierenden Strömungskanal in weiten geeigneten Grenzen frei wählbar.

Eine andere besonders vorteilhafte Weiterbildung des erfindungsgemäßen Flüssigkeitstanks für ein Flüssigkeitssystem eines Fahrzeugs sieht vor, dass eine der Tankgehäuseschalen des Tankgehäuses gleichzeitig als das Ventilgehäuse für das zweite Ventil ausgebildet ist, bevorzugt, dass das Ventilgehäuse als eine unterste Tankgehäuseschale des Tankgehäuses ausgebildet ist, besonders bevorzugt, dass das Tankgehäuse mindestens drei Tankgehäuseschalen mit der untersten Tankgehäuseschale, einer mittleren Tankgehäuseschale und einer obersten Tankgehäuseschale aufweist. Auf diese Weise ist das Tankgehäuse des Flüssigkeitstanks mit dem darin integrierten Ventilgehäuse des zweiten Ventils auf konstruktiv und fertigungstechnisch besonders einfache Art und Weise realisierbar. Dies gilt besonders für die bevorzugte und insbesondere für die besonders bevorzugte Ausführungsform dieser Weiterbildung. Die letztgenannte dreischalige Ausbildung des Tankgehäuses mit einer obersten Tankgehäuseschale, einer mittleren Tankgehäuseschale und einer untersten Tankgehäuseschale, ist jedoch nicht zwingend erforderlich.

Eine weitere vorteilhafte Weiterbildung des erfindungsgemäßen Flüssigkeitstanks für ein Flüssigkeitssystem eines Fahrzeugs sieht vor, dass die Tankgehäuseschalen jeweils als ein Kunststoffspritzgussteil ausgebildet sind. Kunststoffspritzgussteile sind auf vielfältige Art und Weise in technischen Grenzen frei gestaltbar, so dass sich mittels des Kunststoffspritzgießens auch sehr komplizierte Konstruktionen von erfindungsgemäßen Flüssigkeitstanks verwirklichen lassen. Die Ausbildung des Flüssigkeitstanks aus einzelnen Tankgehäuseschalen des Tankgehäuses erhöht die Gestaltungsmöglichkeiten zusätzlich, ohne, dass dadurch die Fertigung des erfindungsgemäßen Flüssigkeitstanks schwieriger werden würde.

Grundsätzlich ist das erfindungsgemäße Flüssigkeitssystem für ein Fahrzeug nach Art, Funktionsweise und Anordnung in dem Fahrzeug in weiten geeigneten Grenzen frei wählbar. Beispielsweise ist es denkbar, dass das Flüssigkeitssystem für das Fahrzeug als ein Kühlmittelsystem zur Kühlung von Fahrzeugkomponenten des Fahrzeugs ausgebildet ist. Rein exemplarisch sei hier lediglich auf Elektrofahrzeuge und sogenannte Hybridfahrzeuge hingewiesen. Derartige Fahrzeuge weisen eine Antriebsbatterie, einen elektrischen Antriebsmotor nebst der dazu korrespondierenden Leistungselektronik sowie beispielsweise einen Kältemittelkreislauf zur Klimatisierung eines Innenraums des Fahrzeugs auf. Die Antriebsbatterie, der elektrische Antriebsmotor mit der korrespondierenden Leistungselektronik und der Kältemittelkreislauf des Fahrzeugs sind beispielsweise auf dem Fachmann an sich bekannte Art und Weise ausgebildet und mittels des als Kühlmittelsystem ausgebildeten erfindungsgemäßen Flüssigkeitssystems kühlbar und/oder heizbar.

Eine vorteilhafte Weiterbildung des erfindungsgemäßen Flüssigkeitssystems für ein Fahrzeug sieht vor, dass eine der Tankgehäuseschalen des Tankgehäuses gleichzeitig als das Ventilgehäuse für das zweite Ventil ausgebildet ist, bevorzugt, dass das Ventilgehäuse als eine unterste Tankgehäuseschale des Tankgehäuses ausgebildet ist, besonders bevorzugt, dass das Tankgehäuse mindestens drei Tankgehäuseschalen mit der untersten Tankgehäuseschale, einer mittleren Tankgehäuseschale und einer obersten Tankgehäuseschale aufweist. Hierdurch ist, wie oben bereits ausgeführt, das Tankgehäuse des Flüssigkeitstanks mit dem darin integrierten Ventilgehäuse auf konstruktiv und fertigungstechnisch einfache Art und Weise verwirklichbar. Dies gilt besonders für die bevorzugte und insbesondere für die besonders bevorzugte Ausführungsform dieser Weiterbildung. Die dreischalige Ausbildung des Tankgehäuses des Flüssigkeitstanks ist jedoch, wie ebenfalls bereits erläutert, nicht zwingend der Fall.

Anhand der beigefügten, grob schematischen Zeichnung wird die Erfindung nachfolgend näher erläutert. Dabei zeigt:
- Fig. 1: ein Ausführungsbeispiel des erfindungsgemäßen Fahrzeugs mit dem erfindungsgemäßen Flüssigkeitssystem in einer ersten teilweisen, perspektivischen Darstellung,
- Fig. 2: das Ausführungsbeispiel in einer zweiten, teilweisen, perspektivischen Darstellung, ohne die oberste Tankgehäuseschale und
- Fig. 3: das Ausführungsbeispiel in einer Detailansicht im Bereich des ersten Ventils, in teilweiser, geschnittener Draufsicht.

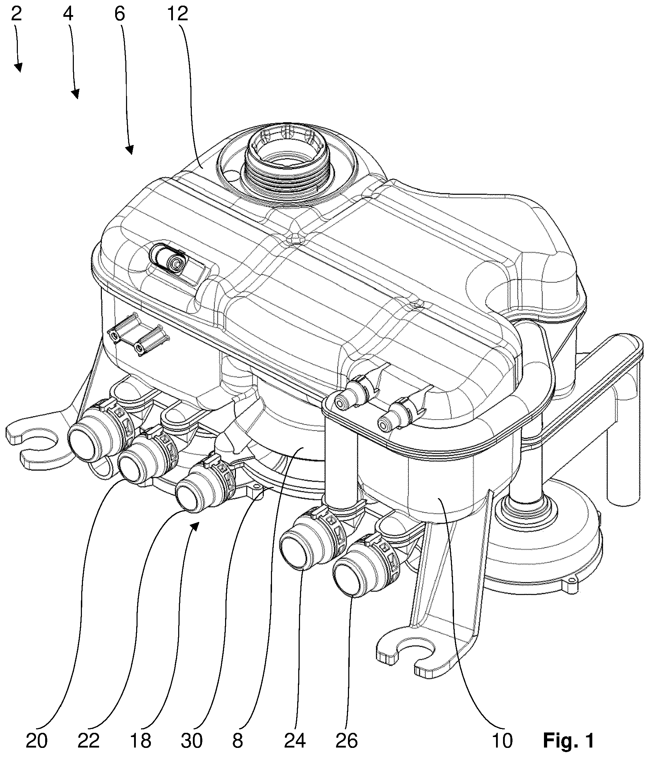

In den Fig. 1 bis 3 ist ein Ausführungsbeispiel eines erfindungsgemäßen Fahrzeugs, mit einem erfindungsgemäßen Flüssigkeitssystem rein exemplarisch dargestellt.

Das Fahrzeug ist hier als ein Kraftfahrzeug, nämlich ein reines Elektrofahrzeug, ausgebildet und nicht näher dargestellt.

Das Flüssigkeitssystem 2 für das Fahrzeug ist bei dem vorliegenden Ausführungsbeispiel als ein Kühlmittelsystem zur Kühlung der Antriebsbatterie, des Antriebsmotors nebst der dazu korrespondierenden Leistungselektronik sowie zur Kühlung eines Kältemittelkreislaufs zur Klimatisierung eines Innenraums des Fahrzeugs ausgebildet. Die Antriebsbatterie, der Antriebsmotor mit der korrespondierenden Leistungselektronik, der Kältemittelkreislauf und der Innenraum des Fahrzeugs sind hier ebenfalls nicht näher dargestellt und beispielsweise auf dem Fachmann an sich bekannte Art und Weise ausgebildet.

Das als Kühlmittelsystem ausgebildete Flüssigkeitssystem 2 umfasst einen als Kühlmitteltank ausgebildeten Flüssigkeitstank 4 zur Bevorratung einer als Kühlmittel ausgebildeten, nicht dargestellten Flüssigkeit des Fahrzeugs und insgesamt drei mit dem Flüssigkeitstank 4 strömungsleitend verbundene und als Kühlmittelkreisläufe ausgebildete Flüssigkeitskreisläufe, in denen die Flüssigkeit zirkuliert. Die Flüssigkeitskreisläufe sind in den Fig. 1 bis 3 nicht näher dargestellt und auf dem Fachmann an sich bekannte Art und Weise ausgebildet.

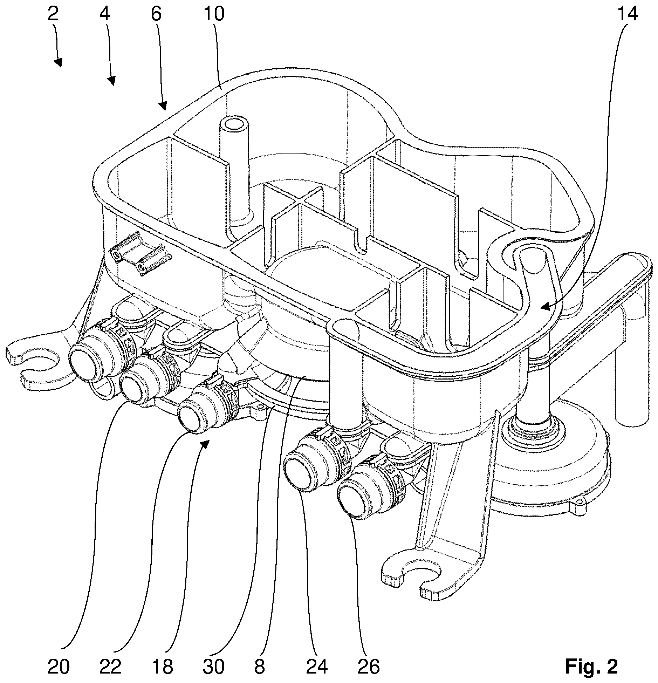

Der Flüssigkeitstank 4 des Flüssigkeitssystems 2 umfasst ein Tankgehäuse 6 zur Bevorratung der Flüssigkeit des Flüssigkeitssystems 2, wobei das Tankgehäuse 6 mehrschalig ausgebildet ist und mindestens zwei miteinander verbundene Tankgehäuseschalen, nämlich eine unterste Tankgehäuseschale 8, eine mittlere Tankgehäuseschale 10 und eine oberste Tankgehäuseschale 12, aufweist, und mindestens einen in dem Tankgehäuse 6 integrierten Strömungskanal des Flüssigkeitssystems 2. Bei dem vorliegenden Ausführungsbeispiel ist einer der in dem Tankgehäuse 6 integrierten Strömungskanäle, nämlich der Strömungskanal 14, mittels zwei miteinander verbundener Tankgehäuseschalen, nämlich der mittleren und obersten Tankgehäuseschale 10, 12 der mindestens zwei Tankgehäuseschalen 8, 10, 12, ausgebildet. Siehe hierzu die Fig. 2. Die Tankgehäuseschalen 8, 10, 12 sind hier jeweils als ein Kunststoffspritzgussteil ausgebildet.

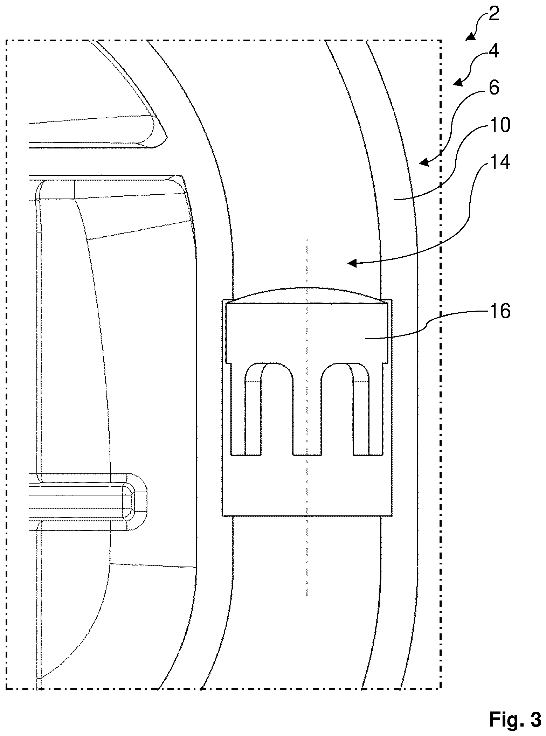

In dem Strömungskanal 14 ist ein als Rückschlagventil ausgebildetes erstes Ventil 16 angeordnet. Siehe hierzu die Fig. 3.

Das Flüssigkeitssystem 2 weist ferner ein mit den Flüssigkeitskreisläufen und/oder dem Flüssigkeitstank 4 strömungsleitend verbundenes zweites Ventil 18 zur Steuerung mindestens eines Flüssigkeitsstromes der Flüssigkeit in dem Flüssigkeitssystem 2 auf, wobei das Tankgehäuse 6, nämlich die unterste Tankgehäuseschale 8, gleichzeitig als ein Ventilgehäuse für das zweite Ventil 18 des Flüssigkeitssystems 2 ausgebildet ist. Siehe hierzu die Fig. 1 und 2.

Das zweite Ventil 18 ist hier als ein sogenanntes Mehrwegeventil ausgebildet und umfasst das gleichzeitig als unterste Tankgehäuseschale 8 ausgebildete Ventilgehäuse mit einer Mehrzahl von Ventilgehäuseöffnungen, einen in dem Ventilgehäuse 8 um eine Drehachse drehbar angeordneten Ventilkörper mit mindestens einem strömungsleitenden Verbindungskanal zur strömungsleitenden Verbindung von mindestens zwei Ventilgehäuseöffnungen der Mehrzahl von Ventilgehäuseöffnungen, eine zwischen dem Ventilgehäuse 8 und dem Ventilkörper angeordnete Ventildichtung mit zu den Ventilgehäuseöffnungen korrespondierenden Ventildichtungsöffnungen, einen Ventilantrieb zur automatischen Drehung des Ventilkörpers um die Drehachse und eine zu den Ventilgehäuseöffnungen korrespondierende Mehrzahl von insgesamt fünf Strömungskanälen zur strömungsleitenden Verbindung des zweiten Ventils 18, nämlich der Ventilgehäuseöffnungen, mit einem Rest des Flüssigkeitssystems 2. In den Fig. 1 und 2 sind lediglich vier der insgesamt fünf Strömungskanäle, nämlich die Strömungskanäle 20, 22, 24, 26, sichtbar.

Die Ventilgehäuseöffnungen des Ventilgehäuses 8 des Ventils 18 sind in den Fig. 1 bis 3 nicht dargestellt. Gleiches gilt für den Ventilkörper mit dem mindestens einen Verbindungskanal, die Ventildichtung mit den zu den Ventilgehäuseöffnungen korrespondierend ausgebildeten Ventildichtungsöffnungen und den Ventilantrieb.

Die mit dem zweiten Ventil 18 strömungsleitend verbundenen Strömungskanäle 20, 22, 24, 26 sind gemeinsam aus einer einzigen ersten Kanalschale und aus einer einzigen zweiten Kanalschale 30 ausgebildet, wobei die erste Kanalschale gleichzeitig als das Ventilgehäuse, nämlich die unterste Tankgehäuseschale 8, ausgebildet ist, die zur Ausbildung der vorgenannten Strömungskanäle 20, 22, 24, 26 mit der zweiten Kanalschale 30 verbindbar ist. Analog zu der gleichzeitig als erste Kanalschale und Ventilgehäuse ausgebildeten untersten Tankgehäuseschale 8 ist die zweite Kanalschale 30 bei dem vorliegenden Ausführungsbeispiel ebenfalls als ein Kunststoffspritzgussteil ausgebildet. Zwecks Ausbildung der vorgenannten Strömungskanäle 20, 22, 24, 26 werden die beiden Kanalschalen 8, 22 mittels Kunststoffschweißen miteinander verbunden. Grundsätzlich sind jedoch auch andere Verbindungstechniken denkbar. Der Fachmann wird, je nach den Erfordernissen des Einzelfalls, die geeignete Verbindungstechnik zur Verbindung der beiden Kanalschalen auswählen. Rein exemplarisch sei hier lediglich auf Klebetechniken hingewiesen.

Die gleichzeitig als Ventilgehäuse und als erste Kanalschale ausgebildete unterste Tankgehäuseschale 8 ist bei dem vorliegenden Ausführungsbeispiel derart formbar ausgebildet, dass eine der Ventildichtung zugewandte Dichtungsseite des Ventilgehäuses 8 nach einem Entformen des Ventilgehäuses 8 im Wesentlichen gratfrei ausgebildet ist. Dies wird hier fertigungstechnisch beispielsweise dadurch umgesetzt, dass eine Formtrennung bei dem oben genannten Kunststoffspritzgussteil, nämlich dem Ventilgehäuse 8, an der Dichtungsseite des Ventilgehäuses 8 konstruktiv vermieden wird.

Im Nachfolgenden wird das erfindungsgemäße Fahrzeug mit dem erfindungsgemäßen Flüssigkeitssystem gemäß dem vorliegenden Ausführungsbeispiel anhand der Fig. 1 bis 3 näher erläutert.

Zunächst werden die einzelnen Tankgehäuseschalen, nämlich die gleichzeitig als erste Kanalschale und Ventilgehäuse ausgebildete unterste Tankgehäuseschale 8, die mittlere Tankgehäuseschale 10 und die oberste Tankgehäuseschale 12 des Tankgehäuses 6 des Flüssigkeitstanks 4 sowie die zweite Kanalschale 30 auf dem Fachmann bekannte Weise jeweils als Kunststoffspritzgussteil einzeln, also voneinander getrennt, hergestellt.

Anschließend werden die einzelnen Tankgehäuseschalen 8, 10, 12 miteinander kunststoffverschweißt, so dass sich das Tankgehäuse 6 des Flüssigkeitstanks 4 ergibt. Siehe hierzu die Fig. 1.

In der Fig. 2 ist der Flüssigkeitstank 4 lediglich teilweise dargestellt, nämlich dahingehend, dass von den insgesamt drei Tankgehäuseschalen 8, 10, 12 des Tankgehäuses 6 lediglich die unterste und die mittlere Tankgehäuseschale 8, 10 gezeigt sind, so dass der Blick auf einen in der mittleren Tankgehäuseschale 10 integrierten Teil des Strömungskanals 14 frei ist. Dieser Teil des Strömungskanals 14 bildet dann, nach der Verbindung der mittleren Tankgehäuseschale 10 mit der in der Fig. 2 nicht dargestellten obersten Tankgehäuseschale 12, in dem ein zu dem vorgenannten Teil des Strömungskanals 14 korrespondierender Teil des Strömungskanals 14 ausgebildet ist, den Strömungskanal 14 aus.

Zwecks Ausbildung der mit dem zweiten Ventil 18 strömungsleitend verbundenen Strömungskanäle 20, 22, 24, 26 wird nun die zweite Kanalschale 30 mit der gleichzeitig als erste Kanalschale und Ventilgehäuse ausgebildeten untersten Tankgehäuseschale 8 kunststoffverschweißt. Analog zu der Ausbildung des Strömungskanals 14 ist ein Teil jedes der Strömungskanäle 20, 22, 24, 26 in der untersten Tankgehäuseschale 8 und ein jeweils dazu korrespondierender Teil jedes der Strömungskanäle 20, 22, 24, 26 in der zweiten Kanalschale 30 ausgebildet. Entsprechend ergeben sich die Strömungskanäle 20, 22, 24, 26 wie aus den Fig. 1 und 2 ersichtlich.

Zum Schluss wird nun das zweite Ventil 18 dadurch komplettiert, dass in die als Ventilgehäuse ausgebildete unterste Tankgehäuseschale 8 zunächst die nicht dargestellte Ventildichtung und anschließend der ebenfalls nicht dargestellte Ventilkörper des zweiten Ventils 18 auf dem Fachmann an sich bekannte Art und Weise eingebracht und befestigt werden. Beispielsweise weist das zweite Ventil 18 hierfür eine ebenfalls nicht dargestellte Abschlussplatte auf, die das zweite Ventil 18 in der jeweiligen Bildebene der Fig. 1 und 2 nach unten hin abschließt. Diese Abschlussplatte wird bei dem vorliegenden Ausführungsbeispiel mittels dreier, nicht dargestellter Schrauben mit der gleichzeitig als Ventilgehäuse ausgebildeten Tankgehäuseschale 8 mechanisch verbunden.

Aufgrund der erfindungsgemäßen Ausbildung des Flüssigkeitstanks für ein Flüssigkeitssystem eines Fahrzeugs, des Flüssigkeitssystems für ein Fahrzeug und des Fahrzeugs gemäß dem vorliegenden Ausführungsbeispiel sind der vorgenannte Flüssigkeitstank 4, das vorgenannte Flüssigkeitssystem 2 und das vorgenannte Fahrzeug auf konstruktiv und fertigungstechnisch besonders einfache Art und Weise realisierbar. Ferner ist dadurch eine Zentralisierung der Bauteile des Flüssigkeitssystems 2 für das Fahrzeug ermöglicht. Gleichzeitig ist dabei eine strömungsoptimierte Formgebung der Strömungskanäle 14, 20, 22, 24, 26 des Flüssigkeitssystems 2 fertigungstechnisch leicht verwirklichbar, da zum einen der mittels der miteinander verbundenen mittleren und obersten Tankgehäuseschale 10, 12 ausgebildete Strömungskanal 14 des Flüssigkeitssystems nicht nur in dem Tankgehäuse 6 integriert ist, sondern aufgrund der vorgenannten Ausbildung konstruktiv in weiten geeigneten Grenzen frei gestaltbar ist. Analoges gilt für die Integration des Ventilgehäuses 8 des zweiten Ventils 18 in das Tankgehäuse 6 und die mit dem zweiten Ventil 18 strömungsleitend verbundenen Strömungskanäle 20, 22, 24, 26, die mittels der gleichzeitig als erste Kanalschale ausgebildeten untersten Tankgehäuseschale 8 ebenfalls in das Tankgehäuse integriert sind.

Die Erfindung ist nicht auf das vorliegende Ausführungsbeispiel begrenzt. Beispielsweise ist die Erfindung auch bei anderen Arten von Fahrzeugen vorteilhaft einsetzbar. Dies gilt nicht lediglich für Landfahrzeuge, sondern auch für Luft- und Seefahrzeuge.

Insbesondere ist die Erfindung nicht auf die konstruktiven und fertigungstechnischen Details des Ausführungsbeispiels beschränkt. Beispielsweise ist die Anzahl des mittels zwei miteinander verbundener Tankgehäuseschalen der mindestens zwei Tankgehäuseschalen ausgebildeten mindestens einen Strömungskanals in weiten geeigneten und technisch möglichen Grenzen frei wählbar. Analoges gilt für die Anzahl der mit dem zweiten Ventil strömungsleitend verbunden Strömungskanäle und der dazu korrespondierenden Ventilgehäuseöffnungen und Ventildichtungsöffnungen. Gleiches gilt für die räumliche Anordnung der einzelnen Strömungskanäle, die ebenfalls in Abhängigkeit der räumlichen Gegebenheiten des jeweiligen Anwendungsfalls in den technischen Grenzen frei wählbar ist.

Denkbar ist auch, dass das Tankgehäuse lediglich aus zwei Tankgehäuseschalen ausgebildet ist. Jedoch ist auch jede andere sinnvolle Anzahl von Tankgehäuseschalen grundsätzlich möglich.

Im Unterschied zu dem vorliegenden Ausführungsbeispiel kann das zweite Ventil mittels dessen Ventilgehäuse auch lediglich an dem Flüssigkeitstank, nämlich dem Tankgehäuse, befestigt sein. Entsprechend ist eine Integration des Ventilgehäuses des zweiten Ventils in das Tankgehäuse nicht zwingend erforderlich. Ferner kann das zweite Ventil auch an anderen geeigneten Komponenten des Fahrzeugs, beispielsweise einer Karosserie oder einem Antriebsmotor des Fahrzeugs, befestigt sein. Jedoch sind auch Ausführungsformen der Erfindung denkbar, bei denen kein zweites Ventil vorhanden ist.

Anstelle der Ausbildung der einzelnen Tankgehäuseschalen als Kunststoffspritzgussteile sind auch andere dem Fachmann bekannte Fertigungstechniken und Materialien für die Tankgehäuseschalen verwendbar. Entsprechend sind als Kunststoffteile ausgebildete Tankgehäuseschalen auch auf andere geeignete Art und Weise herstellbar. Jedoch sind im Unterschied zu Kunststoff auch andere für den jeweiligen Flüssigkeitstank geeignete Materialien, wie beispielsweise Aluminium, für die Herstellung der einzelnen Tankgehäuseschalen einsetzbar. Die jeweilige Verbindungstechnik zur Verbindung der einzelnen Tankgehäuseschalen ist dann auf die verwendeten Materialien angepasst. Selbstverständlich sind auch Kombinationen von Materialien und/oder Fertigungstechniken und/oder Verbindungtechniken bei der Herstellung der Tankgehäuseschalen sowie des Flüssigkeitstanks grundsätzlich denkbar.

Selbstverständlich lässt sich die Erfindung nicht nur bei als Kühlmittelsystemen ausgebildeten Flüssigkeitssystemen eines Fahrzeugs vorteilhaft einsetzen. Entsprechend ist die Erfindung für eine Vielzahl von voneinander verschiedenen Anwendungsfällen verwendbar.

### Bezugszeichenliste

- 2: Flüssigkeitssystem des Fahrzeugs
- 4: Flüssigkeitstank
- 6: Tankgehäuse des Flüssigkeitstanks 4
- 8: Unterste Tankgehäuseschale des Tankgehäuses 6, gleichzeitig als Ventilgehäuse des zweiten Ventils 18 und als erste Kanalschale ausgebildet
- 10: Mittlere Tankgehäuseschale des Tankgehäuses 6
- 12: Oberste Tankgehäuseschale des Tankgehäuses 6
- 14: In das Tankgehäuse 6 integrierter Strömungskanal
- 16: Erstes Ventil, als Rückschlagventil ausgebildet
- 18: Zweites Ventil, als Mehrwegeventil ausgebildet
- 20: Mit dem zweiten Ventil 18 strömungsleitend verbundener Strömungskanal
- 22: Mit dem zweiten Ventil 18 strömungsleitend verbundener Strömungskanal
- 24: Mit dem zweiten Ventil 18 strömungsleitend verbundener Strömungskanal
- 26: Mit dem zweiten Ventil 18 strömungsleitend verbundener Strömungskanal
- 30: Zweite Kanalschale

## Patentansprüche

1. Flüssigkeitstank (4) für ein Flüssigkeitssystem (2) eines Fahrzeugs, umfassend ein Tankgehäuse (6) zur Bevorratung einer Flüssigkeit des Flüssigkeitssystems (2), wobei das Tankgehäuse (6) mehrschalig ausgebildet ist und mindestens zwei miteinander verbundene Tankgehäuseschalen (8, 10, 12) aufweist, und mindestens einen in dem Tankgehäuse (6) integrierten Strömungskanal (14, 20, 22, 24, 26) des Flüssigkeitssystems (2), wobei mindestens einer des in dem Tankgehäuse (6) integrierten mindestens einen Strömungskanals (14) mittels zwei miteinander verbundener Tankgehäuseschalen (10, 12) der mindestens zwei Tankgehäuseschalen (8, 10, 12) ausgebildet ist und in mindestens einem des mindestens einen integrierten Strömungskanals (14) ein als Rückschlagventil ausgebildetes erstes Ventil (16) angeordnet ist,
**dadurch gekennzeichnet,**
**dass** das Tankgehäuse (6) gleichzeitig als ein Ventilgehäuse (8) für mindestens ein zweites Ventil (18) des Flüssigkeitssystems (2) zur Steuerung mindestens eines Flüssigkeitsstromes der Flüssigkeit in dem Flüssigkeitssystem (2) ausgebildet ist.

2. Flüssigkeitstank (4) nach Anspruch 1,
**dadurch gekennzeichnet,**
**dass** das erste Ventil (16) in dem mittels der zwei miteinander verbundenen Tankgehäuseschalen (10, 12) ausgebildeten Strömungskanal (14) angeordnet ist.

3. Flüssigkeitstank (4) nach Anspruch 1 oder 2,
**dadurch gekennzeichnet,**
**dass** eine der Tankgehäuseschalen (8) des Tankgehäuses (6) gleichzeitig als das Ventilgehäuse für das zweite Ventil (18) ausgebildet ist, bevorzugt, dass das Ventilgehäuse als eine unterste Tankgehäuseschale (8) des Tankgehäuses (6) ausgebildet ist, besonders bevorzugt, dass das Tankgehäuse (6) mindestens drei Tankgehäuseschalen (8, 10, 12) mit der untersten Tankgehäuseschale (8), einer mittleren Tankgehäuseschale (10) und einer obersten Tankgehäuseschale (12) aufweist.

4. Flüssigkeitstank (4) nach einem der Ansprüche 1 bis 3,
**dadurch gekennzeichnet,**
**dass** die Tankgehäuseschalen (8, 10, 12) jeweils als ein Kunststoffspritzgussteil ausgebildet sind.

5. Flüssigkeitssystem (2) eines Fahrzeugs, umfassend einen Flüssigkeitstank (4) zur Bevorratung einer Flüssigkeit des Flüssigkeitssystems (2), und mindestens einen mit dem Flüssigkeitstank (4) strömungsleitend verbundenen Flüssigkeitskreislauf mit mindestens einem Strömungskanal (14, 20, 22, 24, 26) in dem die Flüssigkeit zirkuliert,
**dadurch gekennzeichnet,**
**dass** der Flüssigkeitstank (4) nach einem der Ansprüche 1 bis 4 ausgebildet ist, nämlich derart, dass das Flüssigkeitssystem (2) mindestens ein mit dem Flüssigkeitskreislauf und/oder dem Flüssigkeitstank (4) strömungsleitend verbundenes zweites Ventil (18) zur Steuerung mindestens eines Flüssigkeitsstromes der Flüssigkeit in dem Flüssigkeitssystem (2) aufweist, wobei das Tankgehäuse (6) gleichzeitig als ein Ventilgehäuse für das zweite Ventil (18) des Flüssigkeitssystems (2) ausgebildet ist.

6. Flüssigkeitssystem (2) nach Anspruch 5,
**dadurch gekennzeichnet,**
**dass** eine der Tankgehäuseschalen (8) des Tankgehäuses (6) gleichzeitig als das Ventilgehäuse für das zweite Ventil (18) ausgebildet ist, bevorzugt, dass das Ventilgehäuse als eine unterste Tankgehäuseschale (8) des Tankgehäuses (6) ausgebildet ist, besonders bevorzugt, dass das Tankgehäuse (6) mindestens drei Tankgehäuseschalen (8, 10, 12) mit der untersten Tankgehäuseschale (8), einer mittleren Tankgehäuseschale (10) und einer obersten Tankgehäuseschale (12) aufweist.

7. Fahrzeug, umfassend ein Flüssigkeitssystem (2), bevorzugt ein als Kühlmittelsystem ausgebildetes Flüssigkeitssystem (2),
**dadurch gekennzeichnet,**
**dass** das Flüssigkeitssystem (2) nach einem der Ansprüche 5 oder 6 ausgebildet ist.

## Claims

1. Liquid tank (4) for a liquid system (2) of a vehicle, comprising a tank housing (6) for the storage of a liquid of the liquid system (2), wherein the tank housing (6) is designed to be multi-shelled and features at least two tank housing shells (8, 10, 12) connected to each other and at least one flow channel (14, 20, 22, 24, 26) of the liquid system (2) integrated in the tank housing (6), wherein at least one of the at least one flow channel (14) integrated in the tank housing (6) is formed by means of two interconnected tank housing shells (10, 12) of the at least two tank housing shells (8, 10, 12) and a first valve (16) designed as a check valve is arranged in at least one of the at least one integrated flow channel (14),
**characterized in that**
the tank housing is designed (6) at the same time as a valve housing (8) for at last one second valve (18) of the liquid system (2) for controlling at least one liquid flow of the liquid in the liquid system (2).

2. Liquid tank (4) in accordance with claim 1,
**characterized in that**
the first valve (16) is arranged in the flow channel (14) formed by means of the two tank housing shells (10, 12) connected to each other.

3. Liquid tank (4) in accordance with claim 1 or 2,
**characterized in that**
one of the tank housing shells (8) of the tank housing (6) is simultaneously designed as the valve housing for the second valve (18), preferentially **in that** the valve housing is designed as a lowermost tank housing shell (8) of the tank housing (6), particularly preferentially **in that** the tank housing (6) features at least three tank housing shells (8, 10, 12) with the lowermost tank housing shell (8), a middle tank housing shell (10) and an uppermost tank housing shell (12).

4. Liquid tank (4) in accordance with one of claims 1 through 3,
**characterized in that**
the tank housing shells (8, 10, 12) are each designed as an injection-molded plastic part.

5. Liquid system (2) of a vehicle, comprising a liquid tank (4) for storage of a liquid of the liquid system (2) and at least one liquid circuit connected to the liquid tank (4) in a flow-conducting manner, the liquid circuit having at least one flow channel (14, 20, 22, 24, 26) in which the liquid circulates,
**characterized in that**
the liquid tank (4) is fashioned in accordance with one of claims 1 through 4, namely in such a way that the liquid system (2) features at least one second valve (18) connected in a flow-conducting manner to the liquid circuit and/or the liquid tank (4) for controlling at least one liquid flow of the liquid in the liquid system (2), wherein the tank housing (6) is designed at the same time as a valve housing for the second valve (18) of the liquid system (2).

6. Liquid system (2) in accordance with claim 5,
**characterized in that**
one of the tank housing shells (8) of the tank housing (6) is designed at the same time as the valve housing for the second valve (18), preferentially **in that** the valve housing is designed as a lowermost tank housing shell (8) of the tank housing (6), particularly preferentially **in that** the tank housing (6) features at least three tank housing shells (8, 10, 12) with the lowermost tank housing shell (8), a middle tank housing shell (10) and an uppermost tank housing shell (12).

7. Vehicle, comprising a liquid system (2), preferentially a liquid system designed as a coolant system (2),
**characterized in that**
the liquid system (2) is fashioned in accordance with one of claims 5 or 6.

## Revendications

1. Réservoir de liquide (4) pour un système de liquide (2) d'un véhicule, comprenant un boîtier de réservoir (6) pour le stockage d'un liquide du système de liquide (2), le boîtier de réservoir (6) étant réalisé avec plusieurs coques dont au moins deux coques de boîtier de réservoir (8, 10, 12) reliées entre elles et au moins un canal d'écoulement (14, 20, 22, 24, 26) intégré dans le boîtier de réservoir (6) du système de liquide (2), au moins un canal d'écoulement (14) intégré dans le boîtier de réservoir (6) étant constitué de deux coques de boîtier de réservoir (10, 12) des deux coques minimum de boîtier de réservoir (8, 10, 12) reliées entre elles et une première soupape (16) conçue comme un clapet anti-retour étant disposée dans au moins un canal d'écoulement (14) intégré,
**caractérisé en ce que**
le boîtier de réservoir (6) est conçu parallèlement comme boîtier de soupape (8) pour au moins une deuxième soupape (18) du système de liquide (2) pour la commande d'au moins un flux de liquide du liquide dans le système de liquide (2).

2. Réservoir de liquide (4) selon la revendication 1,
**caractérisé en ce que**
la première soupape (16) est montée dans le canal d'écoulement (14) constitué des deux coques de boîtier de réservoir (10, 12) reliées entre elles.

3. Réservoir de liquide (4) selon la revendication 1 ou 2,
**caractérisé en ce que**
l'une des coques de boîtier de réservoir (8) du boîtier de réservoir (6) constitue parallèlement le boîtier de soupape pour la deuxième soupape (18), de préférence **en ce que** le boîtier de soupape est réalisé comme une coque de boîtier de réservoir (8) la plus basse du boîtier de réservoir (6), et plus particulièrement de préférence **en ce que** le boîtier de réservoir (6) présente au moins trois coques de boîtier de réservoir (8, 10, 12) avec la coque de boîtier de réservoir (8) la plus basse, une coque de boîtier de réservoir (10) médiane et une coque de boîtier de réservoir (12) la plus haute.

4. Réservoir de liquide (4) selon l'une des revendications 1 à 3,
**caractérisé en ce que**
les coques de boîtier de réservoir (8, 10, 12) sont réalisées chacune sous la forme d'une pièce moulée par injection de matière plastique.

5. Système de liquide (2) d'un véhicule, comprenant un réservoir de liquide (4) pour le stockage d'un liquide du système de liquide (2) et au moins un circuit de liquide relié au réservoir de liquide (4) de manière à conduire le flux, avec au moins un canal d'écoulement (14, 20, 22, 24, 26) dans lequel le liquide circule,
**caractérisé en ce que**
le réservoir de liquide (4) est réalisé selon l'une des revendications 1 à 4, à savoir de telle sorte que le système de liquide (2) présente au moins une deuxième soupape (18) reliée de manière à guider le flux avec le circuit de liquide et/ou le réservoir de liquide (4) pour commander au moins un flux du liquide dans le système de liquide (2), le boîtier de réservoir (6) étant réalisé parallèlement comme boîtier de soupape pour la deuxième soupape (18) du système de liquide (2).

6. Système de liquide (2) selon la revendication 5,
**caractérisé en ce que**
l'une des coques de boîtier de réservoir (8) du boîtier de réservoir (6) sert parallèlement de boîtier de soupape pour la deuxième soupape (18), de préférence **en ce que**
le boîtier de soupape est réalisé sous la forme d'une coque de boîtier de réservoir (8) la plus basse du boîtier de réservoir (6), et plus particulièrement de préférence **en ce que** le boîtier de réservoir (6) présente au moins trois coques de boîtier de réservoir (8, 10, 12) avec la coque de boîtier de réservoir la plus basse (8), une coque de boîtier de réservoir médiane (10) et une coque de boîtier de réservoir (12) la plus haute.

7. Véhicule, comprenant un système de liquide (2), de préférence un système de liquide (2) conçu comme un système de liquide de refroidissement **caractérisé en ce que**
le système de liquide (2) est réalisé selon l'une des revendications 5 ou 6.
